# EUROPÄISCHE PATENTSCHRIFT

(11) **EP 0 663 326 B1**
(45) Veröffentlichungstag und Bekanntmachung des Hinweises auf die Patenterteilung: **02.04.1997**
(21) Anmeldenummer: 95100245.0
(22) Anmeldetag: 10.01.1995
(51) Int. Cl.: B60R 22/46, B60R 22/18

(54) **Kolbenfangsicherung für einen pyrotechnischen Kolben/Zylinder-Linearantrieb**
Piston catching device for a pyrotechnic linear drive
Dispositif d'attrapage d'un piston pour un entraînement linéaire pyrotechnique

(30) Priorität: 18.01.1994 DE 9400764 U
(43) Veröffentlichungstag der Anmeldung: 19.07.1995
(73) Patentinhaber: TRW Occupant Restraint Systems GmbH, 73553 Alfdorf (DE)
(72) Erfinder: Greiner, Hartmut, D-73553 Alfdorf (DE)
(74) Vertreter: Degwert, Hartmut, Dipl.-Phys.

(56) Entgegenhaltungen:
- EP-A- 0 614 789
- EP-A- 0 614 790
- EP-A- 0 616 928
- DE-A- 2 349 891
- DE-A- 4 224 324
- GB-A- 2 129 496

## Beschreibung

Die Erfindung betrifft eine Kolbenfangsicherung für einen pyrotechnischen Kolben/Zylinder-Linearantrieb, welcher einen Kolben und einen Zylinder aufweist, an einem Gurtstraffer, wobei der Zylinder ein kegelstumpfförmiges freies Ende aufweist und der Kolben am Ende eines Zugseils befestigt ist. Eine derartige gattungsgemäße Kolbenfangsicherung ist aus der GB-A-2129496 bekannt.

Mit zunehmender Leistung von Gurtstrafferantrieben kommt der Kolbenfangsicherung am pyrotechnischen Kolben/Zylinder-Linearantrieb eine größere Bedeutung zu. Die Kolbenfangsicherung muß unter allen Umständen, insbesondere bei nicht benutztem Gurt und erhöhten Temperaturen, durch die der pyrotechnische Gasgenerator in seiner Leistung gesteigert wird, ein Herausfliegen des Kolbens aus dem freien Ende des Zylinders verhindern. Dazu ist es erforderlich, daß die kinetische Energie des Kolbens und der mit diesem bewegten Teile durch plastische Verformung des kegelstumpfförmig verjüngten freien Endes des Zylinders abgebaut wird. Für diese Energieumwandlung wird eine axiale Strecke benötigt, die um so größer ist, desto höher die Leistung des pyrotechnischen Gasgenerators ist.

Durch die Erfindung wird eine Kolbenfangsicherung zur Verfügung gestellt, welche die erforderliche Energieumwandlung bei einem unverändert kurzen konisch verjüngten Ende des Zylinders ermöglicht.

Bei der erfindungsgemäßen Kolbenfangsicherung ist der Kolben an seinem dem freien Ende des Zylinders zugewandten Ende kegelstumpfförmig verjüngt ausgebildet, und ein Ringkolben ist reibschlüssig auf das verjüngte Ende des Kolbens aufgeschoben. Die axiale Länge dieses Ringkolbens ist deutlich kleiner als die des verjüngten Kolbenendes. Wenn der Ringkolben das kegelstumpfförmige freie Ende des Zylinders erreicht, wird seine Weiterbewegung durch das Auftreffen auf der Innenwandung des Zylinderendes behindert, wobei das kegelstumpfförmig verjüngte Ende des Kolbens tiefer in den Ringkolben eindringt. Der Kolben wird nun weiter in dem Ringkolben vorgeschoben, bis der durch die Basis seines kegelstumpfförmigen Endes gebildete Anschlag erreicht ist. Zugleich oder anschließend dringt der Ringkolben auch in das kegelstumpfförmig verjüngte Ende des Zylinders ein und weitet dieses auf. Die gesamte Wegstrecke, auf der eine Energiewandlung durch plastische Verformung stattfindet, ist die Summe aus der Relativbewegung zwischen Ringkolben und Kolben einerseits und der Eindringtiefe des Ringkolbens in das kegelstumpfförmige Ende des Zylinders andererseits. Es tritt also ein Teleskopeffekt auf, der eine Verkürzung des für die Energiewandlung vorgesehenen freien Endes des Zylinders ermöglicht.

Gemäß einer vorteilhaften Weiterbildung ist der Ringkolben in seinem Außendurchmesser dem Durchmesser des Kolbens angepaßt, so daß seine axiale Bewegung schon durch den Beginn der kegelstumpfförmigen Verjüngung am freien Ende des Zylinders gehemmt wird. Gemäß einer vorteilhaften Weiterbildung ist der Ringkolben ferner mit einer umlaufenden Nut in seiner Mantelfläche versehen, wodurch eine plastische Verformung auch des Ringkolbens begünstigt wird.

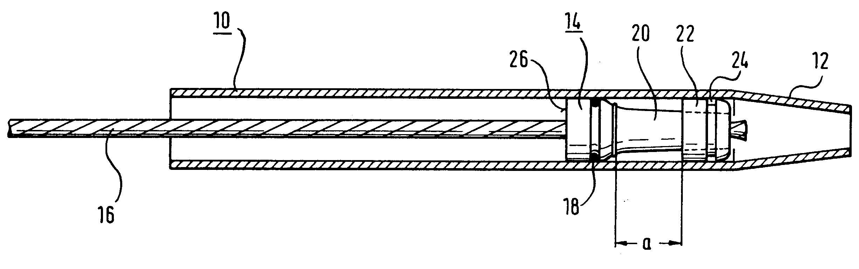

Weitere Merkmale und Vorteile der Erfindung ergeben sich aus der folgenden Beschreibung und aus der Zeichnung, auf die Bezug genommen wird.

Die einzige Figur der Zeichnung zeigt im axialen Schnitt den Endbereich eines Zylinders mit einem Kolben, der das freie Ende des Zylinders erreicht hat.

Der in der Zeichnung gezeigte Zylinder 10 eines pyrotechnischen Kolben/Zylinder-Linearantriebs weist in herkömmlicher Weise ein kegelstumpfförmig verjüngtes freies Ende 12 auf. Im Inneren des Zylinders 10 ist ein Kolben 14, der am Ende eines Zugseils 16 befestigt ist, verschiebbar aufgenommen. Der Kolben 14 weist in seiner Mantelfläche eine umlaufende Nut zur Aufnahme eines Dichtrings 18 auf. Auf seiner dem freien Ende 12 des Zylinders 10 zugewandten Seite ist der Kolben mit einem kegelstumpfförmig verjüngten Teil 20 versehen. Auf diesen kegelstumpfförmig verjüngten Teil 20 ist ein Ringkolben 22 aufgesetzt. Der Ringkolben 22 besteht aus einem plastisch verformbaren Material wie Aluminium oder einem geeigneten Kunststoff und weist in seiner Mantelfläche eine umlaufende Nut 24 auf. Der Außendurchmesser des Ringkolbens 22 entspricht in etwa dem Durchmesser des Kolbens 14.

Bei Aktivierung eines (nicht gezeigten) pyrotechnischen Gasgenerators wird die von dem Ringkolben 22 abgewandte Stirnfläche 26 des Kolbens 14 mit Druck beaufschlagt. Dadurch wird der Kolben mit dem Ringkolben 22 im Zylinder 10 gegen dessen freies Ende 12 getrieben. Wenn der Ringkolben 22 den Beginn des kegelstumpfförmig verjüngten Endes 12 erreicht, wird seine Weiterbewegung durch Anstoßen an der Innenwand dieses Endes 12 gehemmt. Der Kolben 14 wird aber weitergetrieben, so daß sein kegelstumpfförmig verjüngter Teil 20 tiefer in die Bohrung des Ringkolbens 22 eindringt. Bei weiter zunehmendem Eindringen des kegelstumpfförmigen Teils 20 in die Bohrung des Ringkolbens 22 werden beide Teile plastisch verformt, bis schließlich der durch das Ende des kegelstumpfförmigen Teils 20 gebildete Anschlag an der Stirnfläche des Ringkolbens 22 anstößt. Zugleich oder anschließend dringt der Ringkolben 22 in das kegelstumpfförmige Ende 12 des Zylinders ein und weitet dieses auf. Dabei tritt auch eine plastische Verformung des Ringkolbens 22 auf, welche durch die Nut 24 begünstigt wird. Die Wegstrecke, auf der eine plastische Verformung des Ringkolbens und des kegelstumpfförmigen Teils 20 des Kolbens 14 erfolgt, ist in der Zeichnung mit a bezeichnet. Diese Wegstrecke ist funktionell zu der Wegstrecke zu addieren, auf der eine plastische Verformung des kegelstumpfförmigen freien Endes 12 des Zylinders 10 erfolgt.

## Patentansprüche

1. Kolbenfangsicherung für einen pyrotechnischen Kolben/Zylinder-Linearantrieb, welcher einen Kolben (14) und einen Zylinder (10) aufweist, an einem Gurtstraffer, wobei der Zylinder (10) ein kegelstumpfförmiges freies Ende (12) aufweist und der Kolben (14) am Ende eines Zugseils (16) befestigt ist, **dadurch gekennzeichnet**, daß der Kolben (14) an seinem dem freien Ende (12) des Zylinders (10) zugewandten Ende einen kegelstumpfförmig verjüngten Teil (20) aufweist, auf den ein Ringkolben (22) reibschlüssig aufgeschoben ist, dessen axiale Länge wesentlich kleiner ist als die des verjüngten Kolbenteils (20).

2. Kolbenfangsicherung nach Anspruch 1, **dadurch gekennzeichnet**, daß der Außendurchmesser des Ringkolbens (22) etwa mit dem des Kolbens (14) übereinstimmt.

3. Kolbenfangsicherung nach Anspruch 1 oder 2, **dadurch gekennzeichnet**, daß der Ringkolben (22) eine umlaufende Nut (24) in seiner Mantelfläche aufweist.

## Claims

1. A piston catcher for a pyrotechnic linear piston and cylinder drive on a belt pretensioner, the cylinder drive comprising a piston (14) and a cylinder (10), the cylinder (10) having a frustoconical free end (12) and the piston (14) being attached to the end of a cable (16), characterized in that the piston (14) comprises a frustoconically tapered part (20) at its end facing the free end (12) of the cylinder (10), an annular piston (22) being slipped over and frictionally engaged with the tapered part (20) of the piston (14), the axial length of the annular piston being substantially less than that of the tapered part (20).

2. The piston catcher as claimed in claim 1, characterized in that the external diameter of the annular piston (22) is approximately the same as the diameter of the piston (14).

3. The piston catcher as claimed in claim 1 or claim 2, characterized in that the annular piston (22) has a peripherally extending groove (24) in its outer cylindrical surface.

## Revendications

1. Système de sécurité de l'arrêt d'un piston d'une commande pyrotechnique linéaire à piston/cylindre, qui comporte un piston (14) et un cylindre (10) et qui est monté sur un tendeur de ceinture, le cylindre (10) comportant une extrémité libre (12) en forme de tronc de cône et le piston (14) étant fixé à l'extrémité d'un câble de traction (16), caractérisé en ce que le piston (14) comporte, à l'extrémité tournée vers l'extrémité libre (12) du cylindre (10), une partie (20) se rétrécissant en forme de tronc de cône et sur laquelle est enfilé à frottement un piston annulaire (22) dont la longueur axiale est notablement plus faible que celle de la partie (20) du piston qui va en se rétrécissant.

2. Système de sécurité de l'arrêt d'un piston selon la revendication 1, caractérisé en ce que le diamètre extérieur du piston annulaire (22) coïncide approximativement avec celui du piston (14).

3. Système de sécurité de l'arrêt d'un piston selon la revendication 1 ou 2, caractérisé en ce que le piston annulaire (22) comporte une gorge circonférentielle (24) dans la surface de son enveloppe.
